Europäisches Patentamt

European Patent Office

Office européen des brevets

(11) Publication number: **0 395 789**
**A1**

## (12) EUROPEAN PATENT APPLICATION

(21) Application number: **89110133.9**

(51) Int. Cl.5: **C03B 5/235**

(22) Date of filing: **05.06.89**

(30) Priority: **28.03.89 EP 89105413**

(43) Date of publication of application:
**07.11.90 Bulletin 90/45**

(84) Designated Contracting States:
**AT BE CH DE ES FR GB IT LI NL SE**

(71) Applicant: **BETEILIGUNGEN SORG GMBH & CO. KG**
**Postfach 520, Stoltestrasse 23**
**D-8770 Lohr am Main(DE)**

Applicant: **AVIR FINANZIARIA S.p.A.**
**Via Ratti, 5**
**I-14100 Asti(IT)**

(72) Inventor: **Ercole, Pietro Dr.**
**Via Roreto 10**
**Asti(IT)**
Inventor: **Mola, Alessandro Dr.**
**Via Carlo Maria Maggi 62**
**Abbiategrasso(IT)**
Inventor: **Pieper, Helmut**
**Buchenstrasse 19**
**D-8770 Lohr/Main(DE)**

(74) Representative: **Schulze Horn, Stefan,**
**Dipl.-Ing. M.Sc.**
**Goldstrasse 36**
**D-4400 Münster(DE)**

(54) **Process for the purification of waste gases emitted from a melting furnace.**

(57) Waste gases emitted from melting furnaces, especially for the production of soda-lime glass, contain particulate and gaseous pollutants, most of which are separated from the flow of waste gases by conventionell bag filters (10). For that the flow of waste gases is cooled down to a temperature low enough not to damage the filtering material, to avoid condensation processes extensively and to promote chemical reactions of the pollutants on or before the filtering cloth forming particulates which can be filtered easily, e.g. $NaHSO_4$. The conditions necessary for the desired reaction are controlled by a preheater (11). The preheater (11) cools down the waste gas and heats the cullet to be fed. This allows an unlimited recycling of ecology cullet for the production of any type of glass as well as an abatement of particulate material of industrial scale in an economic manner.

Fig.1

EP 0 395 789 A1

## Process for the purification of waste gases emitted from a melting furnace

The present invention relates to a process for the purification of waste gases emitted from a melting furnace for the production of any type of glass and in particular for soda-lime glass by cooling the waste gases and subsequently filtering the waste gases by means of a bag filter, wherein the melting furnace being heated by heavy oil.

The problem of the atmosphere pollution caused by waste gases emitted from glass melting furnaces, and in particular from those of the container or hollow glass industry has been, in the last years, almost exclusively tackled by companies having experience in the conventional abatement equipment field.

Until today, the glass industry has been limited to the application of conventional equipment, namely electrostatic precipitators. This conventional equipment has been modified, not always in a suitable fashion, so as to control or prevent the negative phenomena evidenced during experimentation.

It is clear that a closer study of the chemical characteristics of the flue gases in the following named as waste gases, both of the nature of the present substances and of the elevated temperatures, would have lead to the rejection of nearly all the solutions that until today have been adopted. The reasons for this will be described as follows:

The waste gases discharged from a soda-line glass melting furnace exit from the combustion chamber at a temperature around 1500 - 1600 °C. Then they pass through a heat recovery system that can be of several types but always has, of course, the function of transferring a part of the heat from the waste gases to the combustion air so as to recycle energy to the melting furnace. This type of heat recovery can be obtained by using metallic heat exchangers with tube bundles (recuperators) or by using regeneration chambers which in a discontinuous cycle accumulate heat from the waste gases in refractory bricks or checkers during the exhaust cycle to then release this heat to the combustion air during the firing cycle (regenerators). The effect of these systems is to reduce the temperature of the waste gases to around 750 - 800 °C with the metallic heat exchangers and to around 400 - 500 °C with the regeneration chambers.

It should be stated that an improved heat recovery giving lower temperature waste gases is not feasable using a tube bundle metallic exchanger and with regeneration chambers is subject to obvious thermodynamic limitations besides becoming uneconomical as the checker volume increase required would call for a capital investment that would annul any benefits gained by recovering this extra heat.

It should also be recognized that most glass plants, and nearly all of those producing soda-lime glass containers, use large quantities of energy at high thermal levels but use practically no energy at low thermal levels (low temperature).

This, obviously, limits the possibility of using directly the large amount of energy still present in the waste gases downstream of the heat recovery system described above as its temperature is too low compared with that required for the various process steps.

It is possible to convert this large amount of low temperature energy into steam and then into mechanical or electrical energy. This solution, however, is economical only with waste gas temperatures around 750 - 800 °C and is therefore only applicable on furnaces with metallic recuperators. This also requires heavy financial investments and leads to operating problems as the particulate matter in the gases tends to deposit on the boiler heat exchange surfaces.

These reasons explain why nearly all glass plants discharge waste gases with temperatures between 450 and 800 °C into the atmosphere.

It is known that during the melting process for the production of soda-lime glass, which runs at a mass temperature of around 1350 - 1500 °C, conditions are such that dust particles, Sulphur Dioxide and Sulphur Trioxide and Oxides of Nitrogen are formed. In particular, the dust particles which are present in a waste gases discharged from the furnace stack are formed for the following reasons:

a) Mechanical carry-over of batch raw materials

This phenomenum is, obviously, very dependent on furnace design geometry and on operating methods. Dust particles from mechanical carry-over are normally present as a very small percentage in the waste gases emitted to the atmosphere as they tend to deposit, due to their size, in the regeneration chambers and because wetting of the glass batch can drastically limit this phenomenum.

b) Formation of Sodium Sulphate

EP 0 395 789 A1

This occurs because the waste gases exiting from the melter at a temperature between 1500 - 1600 °C contain Sodium Oxide vapour and Sulphur Dioxide and Sulphur Trioxide. It is well known the the Sodium in soda-lime glasses in the form of Sodium Oxide (12 - 14 %) is by far the most volatile glass component. Therefore its concentration in the waste gases will be higher as the percentage of $Na_2O$ in the glass increases and as the furnace operating temperatures increases. The formation of solid particles from these two components (Sodium Oxide and Sulphur Trioxide) occurs as the waste gases cool down through the regeneration chambers and as long as they reach the temperature at which Sodium Sulphate is stable, namely 750 - 800 °C.

c) Presence of Calcium and Magnesium Sulphate

The formation of these components comes from the reaction of Calcium and Magnesium Carbonates from mechanical carry-over with Sulphur Trioxide.

Gaseous pollutants in soda-lime glass furnace waste gases come from the following:

1) Sulphur Dioxide and Sulphur Trioxide ($SO_x$)

These come from the oxidation of the Sulphur content of the fossil fuel and from the oxidation/reduction-reaction between the Sulphates and the Sulphides present in the glass batch. The oxidation state of the glass and its refining mechanism depend on these reactions. An important quantity of these gases can be liberated by partial degassing from ecology cullet. This latter phenomenum, which in certain instances can be responsible for a large proportion of the $SO_x$ present in the waste gas, occurs when it becomes necessary, for ecological reasons, to use oxidised glass cullet in the production of reduced glasses and is due to the fact that $SO_x$ is far less soluble in reduced glasses than in oxidised ones.

Obviously the difference between the two solubility valves is emitted into the atmosphere with the waste gases.

2) Nitrogen Oxides ($NO_x$)

These are produced by oxidation of the Nitrogen present in the combustion air and is enhanced by the furnace operating temperatures. This secondary, parasitic reaction is favoured by the excess of combustion air necessary to assure complete combustion of the fuel.

3) Fluorides and Chlorides

These are present when the glass batch contains traces of these anions, traces which can be avoided. Fluorides, once added as glass batch fluidising agents are no longer used in soda-lime batch so that their presence in glass furnace waste gases is in sharp and continuous decline. They can only depend on the use of cullet from containers produced before the use of fluorides was abandoned.

Chlorides can be fed to the glass furnace when using soda-ash produced by the Solvay process which uses Sodium Chloride as a raw material.

From the above observations the treatment of glass furnace waste gases to a level not only to satisfy current legis lation but also to affirm that the glass industry does not pollute, like the containers it produces do not, is a very complex problem that can only be tackled and solved, if all glass technology problems are taken into consideration.

The problem of the purification of glass furnace waste gases was initially faced by some American glass plants situated in states (California and New Jersey) that first imposed particulate emission levels far below those measured on glass furnace waste gases. The high waste gas temperatures have, right from the start, meant that bag filters were not considered as there did not, and still do not, exist filtering clothes able to withstand temperatures above 250 °C.

For this reason the choice fell on electrostatic precipitators that, in principle, can operate at temperatures around 400 - 600 °C.

This solution has, however, some limits and several problems. Amongst these the most significant are:

a) The capital investment required to install this type of abatement equipment is very high. An

3

electrostatic precipitator installation which can handle the waste gas from a 220 T/day glass furnace calls for an investment equal to 40 % of that required for the furnace itself.

b) The running costs of an electrostatic precipitator based abatement system, due to the consumption of electrical energy and the manpower necessary for operation and maintenance, are also very high.

c) The continuous operation of an electrostatic precipitator system is problematic due to interruptions caused by the $SO_x$ in the waste gases. This can lead to a shut-down, during which, for long periods, the quality of waste gas emission is compromised.

d) The efficiency, in steady state operation, whilst greatly reducing the particulate level in the waste gas, does not give the necessary garantee to be able to reach, and hold in time, the particulate concentrations imposed by current legislation.

e) The use of electrostatic precipitators, whithin the limits explained above, allows the resolution only of the abatement of particulate matter and gives no help in reducing the emission levels of gaseous pollutants such as $SO_x$, $NO_x$, Fluorids and Chlorides.

To help overcome the problem described in c) above and to reduce the $SO_x$ level in the waste gases, in West Germany some experiments are being carried out treating the waste gases with Calcium Oxide or other basic substances so as to neutralise the $SO_3$ present before passing the gases through the electrostatic precipitator.

This chemical approach has improved the electrostatic precipitator's working conditions and reduced the $SO_x$ concentration in the waste gases. On the other hand the installation has become more complex, requires more capital investment and increased running costs. By this the quantity of particulate material is greatly increased. This quantity cannot be reused in the glass batch because of its very complex chemical composition due to the presence of Calcium Sulphate and of Calcium Oxide.

The difficulties encountered with electrostatic precipitators led, in California, where the atmospheric pollution laws are very strict, to the development of alternative solutions. Amongst these the alternative developed by Latchford Glass, Los Angeles, is very significant as it reduces the waste gas temperature to a level at which the particulate material can be removuved using conventional cloth-type filters.

The temperature reduction is obtained in a "Quenching" plant, a large vessel into which both waste gases and water are fed simultaneously. Part of the heat content of the waste gases is used to evaporate the water. The flow of the water is automatically regulated to keep constant the waste gas exit temperature at a low enough level so as not to damage the filtering material and to avoid condensation of the water vapour which is more probable as its concentration is increased in the "Quenching" process.

The use of water to reduce the waste gas temperature permits also the addition of basic reagents to partially neutralise the $SO_x$ forming solid Sulphates that can be separated by filtration. With this solution interesting results can be obtained, but it presents problems that for many glass plants are irresolvable. The most evident problems are:

1) The space required by this system is very large and is around 4 times that required for the furnace.

2) The capital investment required is similar to that for an electrostatic precipitator as the lower filter system cost is offset by the "Quenching" equipment cost and by the expensive heat-insulated ducting used to connect one to another.

3) The control of the process variables (temperature, reagent feed, filtering etc.) in a plant that is necessarily distant from the furnace tender's working area means the use of specialised labour dedicated to the operation of abatement systems.

Completely different techniques have been experimented to reduce the waste gas temperature so that these become compatible with the thermal resistance of filtering clothes. One of these uses cold air to dilute the furnace waste gases. This method, however, has the negative aspect of diluting the particulate concentration of the fluid to be filtered and essentially increases the flow through the filter. This reduces the efficiency of the filtering system as, even if the particulate concentration exiting remains the same, the dilution with cold air increases the flow. The total quantity (kg/h) emitted into the atmosphere is necessarily much higher. It also determines a need to increase the filter surface area and thus the capital investment for the abatement system becomes greater.

A second method lowers the waste gas temperature using the availabe energy to heat a fluid (for example water) that is then used to heat offices and plant working areas. This approach has also been unsuccessful as the particulate content in the waste gases deposits on the heat exchange surface and determines a decrease in the heat recovery efficiency whilst increasing the danger of sending to the filters waste gases at a temperature high enough to damage the filtering material.

Also if the waste gases are cooled below there dew point, an acidic condensate which causes premature corrosion of the system can be formed. Such a cooling is possible during the initial period of operation as the lack of particulate deposit gives a high heat exchange efficiency.

More recently trials have been carried out to reduce the particulate material in the waste gases emitted from a glass melting furnace by substituting part of the fossil fuel with electrical energy (electrical boosting). This technique, which allows part of the required thermal energy to be supplied directly into the molten glass mass, lowers the furnace upper structure temperatures reducing the Sodium Oxide evaporation and consequently the particulate content of the waste gas. These trials have shown that even if the quality, in particulate and $NO_x$ content, of the waste gases is improved at a boosting level of 7 - 8 % of the total thermal energy we are still far away from satisfying current results. All the methods described above require high capital investment and thus considerably increase container ware production costs.

These abatement systems do not have a financial pay-back, even in a very long period, that covers the related investment.

These are basically the reasons that have determined, in Europe, the Glass Industry's resistance to install furnace waste gas abatement systems. Only in those countries where very strict legislation is in force and where efficient control means are available, abatement systems as those described above habe been installed.

It is therefore an object of the present invention to find an efficient solution for the problem of the abatement of pollutants in flue gases. According to the present invention there is provided a process for the purification of waste gases, wherein the hot waste gases of between about 400 and 750 °C being used to preheat glass cullet or a mechanical mixture of glass cullet and of glass batch, thereby cooling the waste gases to a temperature level low enough to avoid damaging the cloth material of the bag filter and charging the glass cullet or the mechanical mixture of the glass cullet and the glass batch preheated by the waste gases to the melting furnace.

The process described in this invention permits on one hand to resolve, in a very efficient manner, the problem of particulate or dust abatement and on the other hand to control, and reduce, the gaseous pollutants ($SO_x$ and $NO_x$) present in soda-lime glass furnace waste gases.

At the same time significant energy savings and improved melting velocities as well as advantages in waste gas abatement are obtained, if the waste gas of the filtering is cooled by preheating the glass cullet. These advantages, together with the recovery of Sodium Sulphate from the waste gases, give such economical benefits that a relative short investment pay-back is obtainable. It is also possible to obtain a reduction never achieved before in particulate concentration (from 280 to 2 $mg/m^3$) and a significant decrease in $SO_x$ and $NO_x$ levels as well as an unlimited recycling of ecology cullet in an economic manner.

The increasing consumption of glass cullet led to the possibility of its use as a means of extracting heat from the furnace waste gases. For many years the world's leading glass companies have been studying the possibility of using waste gas heat to preheat the glass batch. The results, however, have been until today rather disappointing as direct contact between the hot waste gase and the glass batch has created segregation and agglomeration problems leading to insoluble operating difficulties. On the contrary glass cullet, a well defind chemical product with a much larger grain size, allows to overcome all the above mentioned problems - and that essentially irrespective of the filtering conditions described in this invention.

A system, designed to extract heat from waste gases by preheating glass cullet has been developed. The respective equipment was originally developed to improve the thermal efficiency of a new type of furnace which uses metallic recuperators and thus discharges hot waste gases to the atmosphere.

This new system is used to lower the waste gas temperature to a level at which conventional bag filters can be employed downstream and to recycle energy derived from these same gases by means of preheated glass cullet.

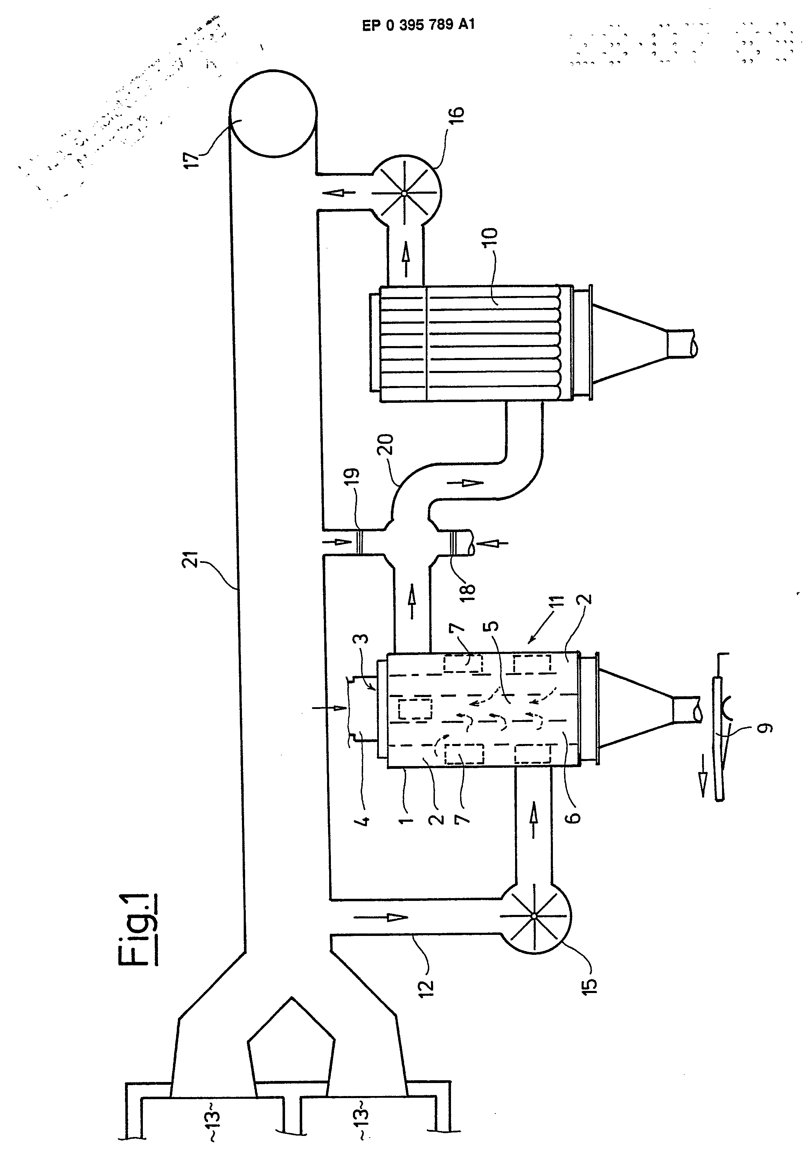

Following these concepts a plant according to fig. 1 has been designed, built and experimented.

Waste gases exiting from regeneration chambers or metallic recuperators 13 of a glass furnace (not shown) at temperatures between 400 and 750 °C are fed through an insulated ducting 12 to the cullet preheating system 11, which is also insulated. This system consists of a silo 1 with an external cavity wall 2 into which the hot waste gases of e.g. 350 °C are introduced by a fan 15, of an opening 3, through which a continuous stream of glass cullet 4 is passed of a central manifold 5 which collects the flue gases that have passed through the cullet bed 6 giving up a large amount of their heat. The flue gases travel across the cullet bed 6 transversaly through passages 7 in the external cavity wall 2, towards the central manifold 5. These passages 7 are constructed in such a manner as to allow the flue gases to flow in but the glass cullet 4 cannot flow out. The glass cullet 4 is continuously fed in from the top and discharged from the base by means of a vibrating channel 9. The ratio between the flow of flue gases and the quantity of glass cullet is determined by a material balance which takes account of the percentage of glass cullet based on furnace pull and of the furnace fuel usage at normal conditions.

The glass cullet, preheated to between 200 and 300 °C according to the quantity being used, is fed hot into the furnace together with the cold glass batch which is stored in a separate bin (not shown). The ratio between cullet and batch is kept constant at the desired level by two dosing systems installed before the batch chargers. The flue gases exiting from the cullet preheating system (waste gases) are cooled down to betwenn 200 und 250 $^{\circ}$C. They are sent through a ladded ducting to a conventional bag filter 10 and then discharged into the atmosphere passing a fan 16 and a stack 17.

The experiences gained on the filtering process downstream of the cullet preheater 11 have shown that in the case of waste gases from soda-lime glass furnaces, filtration is only possible within very strict operating conditions.

The constancy of the filtering temperature can also be guaranted by valves 18 and 19: If the temperature inside the ducting 20 between the cullet preheater 11 and the filter 10 exceeds a limited value, the valve 18 is opened to add fresh air. If the temperature is to low, the valve 19 is opened to supply uncooled waste gas from a bypass channel 21.

Filtering at a temperature above 200 - 205 $^{\circ}$C facilitates the formation of a compact material that forms a film on the filtering cloth surface. This film makes filtration progressively more difficult as the pressure drop across the cloth increases until filtering becomes impossible. Experiments under these conditions gave, after 10 days of operation, a pressure drop of 450 mm of water column across the filter thus impeding the filtering process.

A visual examination and an analysis carried out on the filtering cloth after the experiment was interrupted revealed that around 75 % of the particulate material present in the waste gases filtered was entrained inside the filtering cloth. The filtration gave very low particulate concentration in the filtered fumes (less than 4 mg/Nm$^3$) but the operating conditions where deteriorating to an unacceptable level. The same effect was verified using different types of filter cloth materials. This pointed to the filtration temperature as a determining condition as it effects the structure, the shape and thus the filtrability of the particulates. In fact at a temperature of around 190 $^{\circ}$C an evident change occurs and the filters deposit becomes very fine and easily removable from the filtering bags. This effect is even more pronounced at about 180 $^{\circ}$C. Analyses carried out on the powder and film collected at various filtering temperatures did not show any particular differences either in chemical composition or in compound structure. Chemical analyses gave very similar acidity levels on the samples, around 8 % when expressed in percent of $H_5SO_4$, signifying that $SO_3$ absorbtion was constant at the various filtering temperatures. The result of an X-ray diffraction showed that the main compounds present in both samples were $Na_2SO_4$ and $Na_3(HSO_4)_2$ that is $Na_2SO_4NaHSO_4$.

The chemical and X-ray diffraction results indicate, that the filtering temperatures have no effect on the types of compounds accumulated on the filtering surface. Against this the filtering temperature has a determining role on the structure or shape of the powder drastically changing the filtering capability. It seems improbable that limited temperature variations can create such filtrability differences without being accompanied by a change in the chemical composition of the filtered powder. It is thus logical to assume that at the higher temperature (200 - 205 $^{\circ}$C) the $SO_3$ absorbtion by the Sodium Sulphate present on the filtering surface led to the formation of Sodium Pyrosulphate ($Na_2S_2O_7$) that reacted with ambient humidity to form $Na_2SO_4$ and $NaHSO_4$ before the analysis was carried out, even through precautions were taken to avoid this. At lower temperatures (180 - 190 $^{\circ}$C) this reaction could have occured directly on the filtering surface due to some condensation of the water contained in the waste gases. The filtering difficulties at higher temperatures would be caused by the presence of Sodium Pyrosulphate. The drastic improvement in the filtering capability operating at a temperature around 180 - 190 $^{\circ}$C is an integral part of this invention, whether this depends on a simple chemical mechanism or on a more complex series of chemical reactions.

The lower filtering temperature limit is given as the waste gas condensation temperature which, due to the high $H_2O$ and $SO_3$ content, is at around 140 - 150 $^{\circ}$C.

It is clear that the operating conditions of an industrial installation must take into account any heat losses which can lower the temperature and thus run a danger of condensation.

Though it is advisable to use a filtering material that withstands acidic atmospheres as under certain conditions acid condensates can be formed.

During the experimentation excellent results were obtained using an acid resistant polyimide material (whilst filter bags made with a teflon-coated polyamide lasted only 14 days to to acid corrosion).

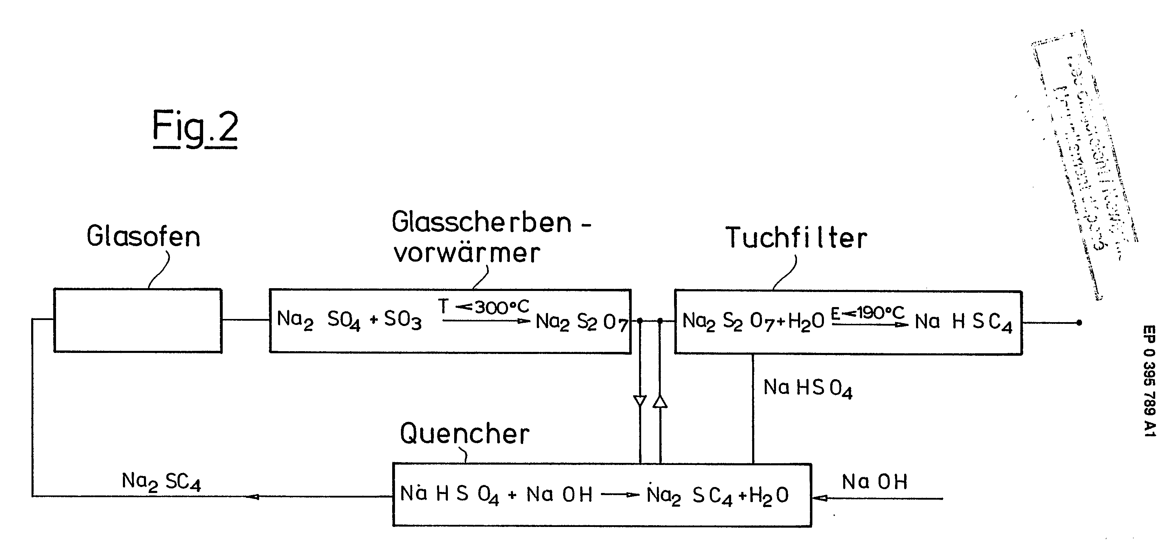

Trials carried out on a system as described above gave excellent results which were confirmed several times through longer periods. Amongst those process conditions and results, as shown in fig. 2, the most significant were:

1. The quality of the waste gases discharged to the atmosphere of the filtering by conventional filter bags or filter tubes was very good. The level of particulates or dust was reduced to very low values (around 4-5 mg/m$^3$). These low values were maintained for the duration of the trials which were very long at about 100 days in order to evaluate correctly the thermal and chemical resistance of the filtering material.

2. Analyses of the waste gas carried out upstream of the cullet preheater, between this and the filter bag as well as downstream of the filter showed a surprising reduction (40-50 %) in the $SO_x$ concentration of samples taken before and after the filter. Analyses of the material accumulated by the filter bag show that at the waste gas filtering temperature (160 - 200 °C) the thermodynamical conditions are such that Sodium Pyrosulphate ($Na_2S_2O_7$) is formed which then reacts with water to form Sodium Bisulphate ($NaHSO_4$)

It is known that particulate matter present in waste gas emitted from a soda-lime glass furnace is mainly (90-92 %) Sodium Sulphate. This salt can absorb part of the $SO_3$ in the waste gas to form Sodium Pyrosulphate at ambient temperatures of below 300 °C. This reaction is favoured by the filtering conditions which lie between 160 to 200 °C, as a part of the waste gas heat have been removed by the cullet preheater. The waste gases containing $SO_3$ are in fact forced to pass through a layer of Sodium Sulphate which is always present on the filter surface. The ratio between the mass of $Na_2SO_4$ and that of $SO_3$ thus very high and favours this reaction.

For the reasons mentioned above it can be necessary to operate under temperature conditions that favour a small quantity of water condensation. This transforms the Pyrosulphate ($Na_2S_2O_7$) in Sodium Bisulphate which, being much easier to filter, allows a better filtration process.

The above mentioned reactions, which are possible due to the waste gas temperature reduction, and thus are integral part of the present invention, cause a surprising decrease in the $SO_x$ concentration of the waste gases discharged into the atmosphere as mentioned above.

3. The powder periodically extracted from the filter contained Sodium Sulphate ($Na_2SO_4$) and Sodium Bisulphate ($NaHSO_4$), small quantities of Calcium and Magnesium Sulphates and a small quantity of glass dust carried over from the equipment installed upstream of the filter bag.

Following a typical analysis of the powder extracted by the filter is given:

| $Na_2SO_4$ = | 54,2 % | $K_2SO_4$ = | 7,03 % |
|---|---|---|---|
| $CaSO_4$ = | 3,6 % | $NaHSO_4$ = | 20,80 % |
| $MgSO_4$ = | 0,6 % | $PbSO_4$ = | 2,7 % |
| Glass = | 11,0 % | | |

This powder can be reused in the glass batch instead of Sodium Sulphate which is necessary to control the oxidation state of the glass melt and to help the glass refining process (gas ($CO_2$) release from the glass melt). It can be reused as it is or after neutralisation of the present Sodium Bisulphate ($NaHSO_4$) with Sodium Hydroxide ($NaOH$). Treatment with Sodium Hydroxide makes that portion of the $SO_3$ blocked under the form of Sodium Bisulphate thermally stable increasing its efficiency to control the oxidation and refining processes of the glass melt. The powder extracted from the bag filter can thus be added to a Sodium Hydroxide solution in order to obtain a neutal suspension of Sodium Sulphate by the following reaction

$NaHSO_4$ + $NaOH$ -- $Na_2SO_4$ + $H_2O$

This suspension can be pumped in measured quantities into the batch mixer and thus recycled to the furnace.

4. The preparation of a neutral acqueus suspension of Sodium Sulphate by the neutralisation of the powder extracted by the bag filter gives a method for an advantageous using of the $SO_3$ absorbtion effect described in 2. above. This advantage, which is also an integral part of this invention, depents on pumping a portion of the Sodium Sulphate suspension to a small "Quencher" installed immediately downstream of the cullet preheater and upstream of the filter. A minimal part of the residual heat content in the waste gas then is used evaporate the water added with the Sodium Sulphate suspension. This permits the thermal regulation of the waste gas entering the bag filter to a temperature low enough to assure a long service life of the filter material but high enough to avoid excessive water condensation above that required to transform the Pyrosulphate ($Na_2S_2O_7$) into Bisulphate ($NaHSO_4$). The most interesting aspect of this expedient is that it allows to increase at will the ration between the Sodium Sulphate and the $SO_x$ contents in the waste gas and consequently to favour the above described reactions and further to reduce the $SO_x$ level in the waste gas emitted into the atmosphere. Recycling of the powder already separated does, of course, cause an increase in the load on the filter and the filtering surface must be increased accordingly. This problem is partly solved due to the glass dust carried by the gases as this functions as a filtering aid helping to keep the pressure drop at a given flow at the filter low even with waste gases which due to the recycling have a higher particulate concentration than normal.

5. One of the principal advantages of the surprising discoveries described in 2., 3. and 4., which are an integral part of this invention, is that it is possible to trap on the bag filter a large part of the $SO_3$ that is

7

produced by using the ecology cullet which, for obvious reasons must be fed to the furnace. This cullet is of the mixed type as it contains soda-lime glass of various colors and thus of different oxidation levels. The use of this type of cullet necessarily produces large quantities of $SO_x$ during the melting process. It is known that the solubility of $SO_x$ in soda-lime glasses increases rapidly as the glass oxidation level increases. This level is choosen based on the spectrophotometric characteristics requires (color and U.V. absorbtion). Oxidised glasses can have an $SO_3$ concentration around 0,35-0,38 % while reduced glasses can be as low as 0,02 %. Therefore it is evident that when producing either an oxidised glass or a reduced one the use of mixed ecology cullet will catalyse an oxidation-reduction reaction, which, changing the glass Sulphide's solubility will liberate large quantities of $SO_x$ into the waste gas. In many cases the above mentioned phenomena will generate conditions in which the maximum legal emission concentrations are exceeded even when using natural gas which contains only traces of Sulphur.

The surprising capacity of Sodium Sulphate to absorb $SO_3$ at the filter working temperature, coupled with the possibility of adding to the layer of Sodium Sulphate on the filter by recycling a portion of the suspension obtained by neutralising the powder collected with Sodium Hydroxide not only gives low $SO_x$ concentrations in the waste gas after filtering but allows the unlimited use of ecology cullet which in the past had to be limited as it increased the $SO_x$ emission values.

6. Another important advantage of the depuration cycle according to the present invention is the effect that using preheated cullet has on the $NO_x$ concentration of the waste gas emitted into the atmosphere. The charging of preheated cullet gives substantial benefits as far as the velocity of those reactions involved in transforming the batch into glass are concerned. This effect, which is of course more pronounced the higher the percentage of cullet based on glass pull being used, allows keeping the same specific furnace pull at the same glass quality level and lower furnace operating temperatures. As it is known and mentioned above a reduced furnace temperature reduces the Nitrogen oxidation reaction and thus also the $NO_x$ concentration in the waste gas. Lowering the furnace operating temperature also reduces the glass contact and upperstructrure refractory wear so increasing the furnace life.

7. The particulate or dust abatement process and the control and reduction of the gaseous pollutans present in the waste gas emitted into the atmosphere from a soda-lime glass melting furnace, according to the present invention also gives the following economical benefits:

7a. The possibility of using unlimitted quantities of ecology cullet permits a reduction in furnace energy consumption thus lowering glass production costs. Whilst the risk of exceeding legal $SO_x$ emission levels is avoided.

7b. The possility of using preheated cullet gives, obviously, a further energy reduction and lowering of glass production costs.

7c. The possicibility of recycling the Sodium Sulphate extracted from the waste gases into the glass batch gives a correct disposal method for the powder collected and avoids the purchase of these ingredients and so reduces the raw material costs.

7d. The lowering of the furnace operating temperature increase the service life of the glass contact and upperstructure refractories giving an improved furnace life and reducing the effect of rebuild costs and of the unit glass costs as well.

The above mentioned aspects are very important as the economical benefits generated by them give savings so that the capital investment necessary for an industrial installation has a pay-back of 5 to 7 years according to the applied quantity of cullet.

All the abatement systems that have preceded the above described invention have much higher investment costs and not only do not generate economic benefits but are burdened with high operating costs.

More advantageous aspects of the present invention follow from claims 2 - 21.

For illustrative but not limitative purposes, some examples relative to the trials carried out on a pilot plant capable of treating about 10 % (1200 $Nm^3/h$) of the flue gases from a 210 t/day glass furnace are listed below:

Example 1:

Cullet 40 % of glass pull
Flow 1200 $Nm^3/h$
Waste gas analysis: particulate level 2 $mg/m^3$
$SO_x$ reduction: 40 %
Powder composition:

Furnace energy reduction: 4 %

Example 2:

Cullet 40 %
Flow 1200 Nm$^3$/h
Waste gas analysis: particulate level 2 mg/m$^3$
Na$_2$SO$_4$ at the filter: 1,5 time the level in the waste gases
SO$_x$ reduction: 60 %
Furnace energy reduction: 4 %

Example 3:

Cullet 40 %
Flow 1200 Nm$^3$/h
Waste gas analysis: particulate level 2 mg/m$^3$
Na$_2$SO$_4$ at the filter: 2,0 times the level in the waste gases
SO$_x$ reduction: 60 %
Furnace energy reduction: 4 %

Example 4:

Cullet 50 %
Flow 1200 Nm$^3$/h
Na$_2$SO$_4$: only waste gas level
SO$_x$ reduction: 45 %
Furnace energy reduction: 5 %

**Claims**

1. Process for the purification of waste gases emitted from a melting furnace for the production of any type of glass and in particular for soda-lime glass by cooling the waste gases and subsequently filtering the waste gases by means of a bag filter, wherein
the melting furnace being heated by heavy oil,
the hot waste gases of between about 400 and 750 °C being used to preheat glass cullet or a mechanical mixture of glass cullet and of glass batch,
thereby cooling the waste gases to a temperature level low enough to avoid damaging the cloth material of the bag filter and
charging the glass cullet or the mechanical mixture of the glass cullet and the glass batch preheated by the waste gases to the melting furnace.

2. Process according to claim 1, characterized in that the temperature conditions of the waste gases at the bag filter are held at a level such as to promote a partial and modest condensation of the water vapour present in the waste gases and to promote a reaction of said condensed water with a Pyrosulphate constituted from constituents of the waste gases to a Bisulphate especially according to the reaction
Na$_2$S$_2$O$_7$ + H$_2$O -- 2NaHSO$_4$.

3. Process according to claim 2, characterized in that the Pyrosulphate being constituted by a reaction of SO$_x$ contained in the waste gases with a further sulphur compound being contained at least in the waste gases, especially according to the reaction
Na$_2$SO$_4$ + SO$_3$ -- Na$_2$S$_2$O$_7$.

4. Process according to claim 1, characterized in that the temperature conditions of the waste gases at the bag filter are held at a level such that SO$_x$ contained in the waste gases react with a further sulphur compound being contained at least in the waste gases to a Pyrosulphate, especially according to the reaction
Na$_2$SO$_4$ + SO$_3$ -- Na$_2$S$_2$O$_7$.

5. Process according to any of the preceding claims characterized in that the bag filter is operated at a temperature between 150 and 250 °C and preferably between 180 and 190 °C.

6. Process according to any of the preceding claims, characterized in that the waste gases are fed to

9

EP 0 395 789 A1

the preheater of the glass cullet or said mechanical mixture at a temperature between 300 and 850 °C, preferably between 400 and 750 °C.

7. Process according to any of the preceding claims, characterized in that the preheating of the glass cullet or of said mechanical mixture is effected in a system, where the heat exchange is obtained by direct contact of the waste gases with the glass cullet or with said mechanical mixture preferably by passing the waste gases across or against the stream of the cullet or of said mechanical mixture.

8. Process according to any of the preceding claims, characterized in that the heat exchange between the waste gases and the glass cullet or said mechanical mixture is effected at a waste gas velocity between 0,05 and 0,15 m/s, preferably at about 0,1 m/s.

9. Process according to any of the preceding claims, characterized in that the waste gases exiting from the preheater for the glass cullet or said mechanical mixture having a temperature between 150 and 350 °C, preferably between 200 and 300 °C.

10. Process according to any of the preceding claims, characterized in that the operating temperature of the bag filter is controlled by diluting the waste gases exiting from the preheater for the glass cullet or said mechanical mixture with colder air or by adding to the waste gases exiting from the preheater for the glass cullet or said mechanical mixture hotter waste gases.

11. Process according to any of the preceding claims, characterized in that the operating temperature of the bag filter is held high enough to avoid or to control acid condensation.

12. Process according to any of the preceding claims, characterized in that the operating temperature of the filter bag is controlled by mixing the waste gases exiting from the preheater for glass cullet or said mechanical mixture with water or an acqueous suspension of $Na_2SO_4$.

13. Process according to any of the preceding claims, characterized in that the waste gases exiting from the melting furnace are treated with Calcium oxide or Magnesium oxide or an acqueous solution of NaOH or several of these components to neutralize the $SO_3$ present in the waste gases.

14. Process according to claim 13, characterized in that the neutralization of the waste gases is carried out downstream of the preheater for the glass cullet or said mechanical mixture and upstream of the bag filter.

15. Process according to any of the preceding claims characterized in that the particles filtered by the bag filter are stripped from the bag filter and transformed to a sulphate especially according to one or both of the following reactions

$NaHSO_4 + NaOH \rightarrow Na_2SO_4 + H_2O$

$Na_2S_2O_7 + 2NaOH \rightarrow 2Na_2SO_4 + H_2O$.

16. Process according to claim 15, characterized in that part or all of the sulphate obtained is recycled to the waste gas upstream of the bag filter.

17. Process according to claim 15 or 16, characterized in that part or all of the sulphate obtained is used in the glass batch preparation.

18. Process according to any of the preceding claims, characterized in that the temperature of the waste gas for the filtration step is controlled by adding water to the glass cullet or to said mechanical mixture being fed to the preheater.

19. Process according to claim 18, characterized in that Calcium or Magnesium or Sodium sulphate or several of these compounds, especially as product out of the neutralization reaction of $SO_3$ with Calcium oxide, Magnesium oxide or NaOH, is stripped from the glass cullet or said mechanical mixture exiting from the preheater.

20. Process according to claim 19, characterized in that said stripping is effected by screening, classifying or the like.

21. Apparatus for the purification of waste gases emitted from a melting furnace for the production of any type of glass and in particular for soda-lime glass by cooling the waste gases and subsequently filtering the waste gases by means of a bag filter comprising

said bag filter (10),

a preheater (12) for preheating glass cullet or a mechanical mixture of glass cullet and glass batch by cooling waste gases upstream of the bag filter,

means for conveying the preheated glass cullet or the preheated mechanical mixture exiting from the preheater to the melting furnace and

means for controlling the temperature of the waste gases entering the filter (10).

10

Fig.1

# Fig.2

Glasofen

Glasscherben-vorwärmer

Tuchfilter

$Na_2\ SO_4 + SO_3 \xrightarrow{T\,<300°C} Na_2\ S_2\ O_7$

$Na_2\ S_2\ O_7 + H_2O \xrightarrow{E\,<190°C} Na\ H\ S\ C_4$

Na HS O$_4$

Quencher

$Na_2\ SC_4$

$Na\ H\ S\ O_4 + Na\ OH \longrightarrow Na_2\ SC_4 + H_2O$

Na OH

EP 0 395 789 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-305584 (HIMLY, HOLSCHER GMBH) <br> * claims 1-8, 10, 13 * | 1-7, 11-14, 17 | C03B5/235 |
| A | GLASTECHNISCHE BERICHTE. <br> vol. 59, no. 12, 1986, FRANKFURT DE <br> pages 333 - 343; U.KIRCHER: <br> "Fortschritte bei der Abgasreinigung von <br> Glasschmelzoefen" <br> * page 338, right-hand column - page 340, <br> right-hand column, line 14 * | 1, 17 | |
| A,P | GLASTECHNISCHE BERICHTE. <br> vol. 62, no. 6, June 1989, FRANKFURT DE <br> pages 219 - 221; H.PIEPER: <br> "First Experiencecs with the new Ecological <br> Recuperative Glass Furnace"Sorg LoNOx Melter"" <br> * the whole document * | 1 | |
| A | GLASTECHNISCHE BERICHTE. <br> vol. 58, no. 12, 1958, FRANKFURT DE <br> pages 331 - 339; A.MARGRAF: <br> "Abgasentstaubung hinter Glasschmelzoefen mit <br> filternden Abscheidern undvorgeschalteter <br> Sorptionsstufe zur Beseitigung von HF und" <br> * the whole document * | 1 | TECHNICAL FIELDS SEARCHED (Int. Cl.5 ) <br><br> B01D <br> F27D <br> C03B |
| A | SPRECHSAAL. <br> vol. 120, no. 5, May 1987, COBURG DE <br> pages 390 - 395; J.LEIMKUEHLER et al.: <br> "Abgasreinigung fuer Glasschmelzoefen" <br> * the whole document * | 1 | |

The present search report has been drawn up for all claims

| Place of search | Date of completion of the search | Examiner |
|---|---|---|
| BERLIN | 29 AUGUST 1990 | BERTRAM H.E.H. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P0401)